Europäisches Patentamt

(19) European Patent Office

Office européen des brevets

(11) Veröffentlichungsnummer: **0 009 217**
**B1**

(12) **EUROPÄISCHE PATENTSCHRIFT**

(45) Veröffentlichungstag der Patentschrift:
02.11.83

(51) Int. Cl.³: **B 01 D 53/04,** C 01 B 3/56,
C 10 K 1/20

(21) Anmeldenummer: **79103442.4**

(22) Anmeldetag: **14.09.79**

(54) **Adiabatisches Adsorptionsverfahren zur Gasreinigung oder -trennung.**

(30) Priorität: 16.09.78 DE 2840357

(43) Veröffentlichungstag der Anmeldung:
02.04.80 Patentblatt 80/7

(45) Bekanntmachung des Hinweises auf die Patenterteilung:
02.11.83 Patentblatt 83/44

(84) Benannte Vertragsstaaten:
AT BE CH DE FR GB IT NL

(56) Entgegenhaltungen:
DE - A - 2 315 113
DE - A - 2 509 573
DE - A - 2 548 291
DE - A - 2 624 346
DE - A - 2 629 450
DE - A - 2 752 801

(73) Patentinhaber: Linde Aktiengesellschaft,
Abraham-Lincoln-Strasse 21, D-6200 Wiesbaden (DE)

(72) Erfinder: Benkmann, Christian, Zündterstrasse 27,
D-8000 München 21 (DE)

(74) Vertreter: Schaefer, Gerhard, Dr., Linde
Aktiengesellschaft Zentrale Patentabteilung,
D-8023 Höllriegelskreuth (DE)

Adiabatisches Adsorptionsverfahren zur Gasreinigung oder -trennung

Die Erfindung betrifft ein adiabatisches Adsorptionsverfahren zur Gasreinigung oder Gastrennung unter Verwendung mehrerer umschaltbarer Adsorber, von denen jede eine Adsorptionsphase, während der er mit einem Rohgas beaufschlagt wird, und nachfolgend eine Regenerierung durchläuft, die durch Druckwechsel in mindestens zwei Entspannungsstufen und mindestens einer Druckaufbaustufe mit dazwischen geschalteter Spülung erfolgt.

Derartige Verfahren, allgemein unter der Bezeichnung «Druckwechsel-Adsorption» (pressure swing adsorption) bekannt, werden bereits in einer Vielzahl unterschiedlicher Verfahrensvarianten betrieben. Ein derartiges Verfahren ist beispielsweise in der DE-A-26 24 346 beschrieben. Alle diese Verfahren benötigen keine Heizenergie zur Regenerierung der Adsorbensmasse, wodurch sie energetisch besonders günstig sind. Ein wesentliches Merkmal besteht weiterhin darin, dass die während der auf die eigentliche Adsorptionsphase folgende Entspannung freigesetzten Gase auf dem Weg des Druckausgleichs zum Druckaufbau anderer Adsorber verwendet werden. Je mehr umschaltbare Adsorber eine nach einem derartigen Verfahren betriebene Adsorptionsanlage aufweist, desto mehr Entspannungs- und Druckaufbaustufen sind im allgemeinen vorgesehen. Dies führt zu einer immer besseren Ausnutzung der Entspannungsgase, bei denen es sich im wesentlichen um die nach Abschluss der Adsorptionsphase im Lückenvolumen des Adsorptionsmittels verbleibenden Gase handelt. Gleichwohl sind auch derartige Adsorptionsverfahren noch verbesserungsbedürftig, was die Wirtschaftlichkeit der Verfahrensführung sowie die optimale Nutzung der Apparaturen einschliesslich des Adsorptionsmittels angeht.

Der Erfindung liegt daher die Aufgabe zugrunde, ein Verfahren der eingangs genannten Art bereitzustellen, das hinsichtlich der Verfahrensführung sowie der Ausnutzung der Apparaturen einschliesslich der Adsorptionsmittelbeschickung besonders wirtschaftlich ist.

Diese Aufgabe wird dadurch gelöst, dass mindestens einer der Adsorber als Hilfsadsorber mit gegenüber den Hauptadsorbern verringerter Dauer der Adsorptionsphase oder mit gegenüber den Hauptadsorbern verringerter Adsorptionsmittelbeschickung und verringerter Dauer der Adsorptionsphase betrieben wird.

Während bei den bisher bekannten Druckwechsel-Adsorptionsverfahren die umschaltbaren Adsorber stets in gleichberechtigter Weise betrieben wurden, sind gemäss der Erfindung Hilfsadsorber vorgesehen, deren Anzahl zunächst in einem beliebigen Verhältnis zur Anzahl der Hauptadsorber stehen kann. Als wesentlicher Vorteil gegenüber den bekannten Verfahren resultiert eine erhebliche Steigerung der Anzahl der für die Verfahrensführung sich ergebenden Variationsmöglichkeiten. Dies führt zu einer weiteren Erhöhung der Wirtschaftlichkeit. Die Hilfsadsorber zeichnen sich zunächst dadurch aus, dass sie mit verkürzter Adsorptionsphase betrieben werden. Zusätzlich kann eine entsprechende Verringerung der Adsorptionsmittelbeschickung und folglich eine Verkleinerung der Adsorber vorgenommen werden.

In Weiterbildung der Erfindung ist vorgesehen, dass der oder die Hilfsadsorber mit verkürzter Periodendauer betrieben werden. Diese Betriebsweise wird im allgemeinen dann zu bevorzugen sein, wenn die Anzahl der Hauptadsorber die der Hilfsadsorber übersteigt. Die Verkürzung der Periodendauer der Hilfsadsorber im Vergleich zu derjenigen der Hauptadsorber ermöglicht eine flexible Anpassung in der Verfahrensführung. Insbesondere wird eine Halbierung der Periodendauer dann zweckmässig sein, wenn doppelt so viele Hauptadsorber wie Hilfsadsorber verwendet werden.

Hinsichtlich der Verfahrensführung ist weiterhin vorgesehen, dass mindestens eine der Entspannungs- und/oder der Druckaufbaustufen der Haupt- und/oder der Hilfsadsorber im Druckausgleich mit der jeweils anderen Adsorberart betrieben wird. Druckausgleich zwischen Entspannungs- und Druckaufbaustufen verschiedener Adsorber findet somit nicht nur innerhalb der Gruppe der Hauptadsorber sowie innerhalb der Gruppe der Hilfsadsorber statt, sondern Adsorber aus jeder der beiden Gruppen treten in jeweils geeigneter Weise miteinander in Austausch. In demselben Sinne erweist es sich als zweckmässig, Entspannungsgas aus mindestens einer der Entspannungsstufen der Haupt- und/oder der Hilfsadsorber zum Spülen eines Adsorbers der jeweils anderen Adsorberart zu verwenden. Damit sind beide Adsorberarten voll in das Gesamtsystem integriert. Es ergibt sich eine Vielzahl von Kombinationsmöglichkeiten ohne Beschränkung auf einzelne Stufen der Regenerierphase.

Hinsichtlich des zeitlichen Ablaufs der Adsorptionsphasen ergeben sich verschiedene Möglichkeiten:

So kann es beispielsweise zweckmässig sein, wenn die einzelnen Adsorptionsphasen der Hauptadsorber jeweils zu Beginn und gegen Ende von Adsorptionsphasen anderer Hauptadsorber zeitlich überlappt und unmittelbar zwischen die Überlappungszeiträume die Adsorptionsphasen von Hilfsadsorbern geschaltet werden. Für die Dauer einer Adsorptionsphase eines ersten Hauptadsorbers sind diesem jeweils zwei andere Hauptadsorber in der Weise zugeordnet, dass während eines gewissen Zeitraumes nach Beginn der Adsorptionsphase die Adsorptionsphase eines der beiden anderen zugeordneten Hauptadsorber noch nicht beendet ist, während die Adsorptionsphase des anderen der beiden zugeordneten Hauptadsorber bereits vor dem Abschluss der Adsorptionsphase des ersten Hauptadsorbers beginnt. Somit ergeben sich zwei Überlappungszeiträume, die durch einen gewissen Zeitraum voneinander getrennt sind, wobei während dieses Zeitraumes im Gegensatz zu den überlappungszeiträumen nur der erste der drei zugeordneten Hauptadsorber auf Adsorption geschaltet ist. Um die Kontinuität des Verfahrens zu gewährleisten, wird während dieses Zeitraumes einer der Hilfsadsorber auf Adsorption geschaltet. Dieser übernimmt denjenigen Rohgasstrom, der während des ersten Überlappungszeitraumes den entsprechenden zugeordneten Hauptadsorber durchströmt und übergibt diesen Rohgasstrom zu Beginn des zweiten Überlappungszeitraumes an den anderen zugeordneten Hauptadsorber.

Als weitere Möglichkeit hinsichtlich der zeitlichen Aufeinanderfolge der Adsorptionsphasen ist vorgesehen, dass die Adsorptionsphasen der verschiedenen Hauptadsorber zeitlich nicht direkt aufeinanderfolgen und die Adsorptionsphasen der Hilfsadsorber zeitlich zwischen die Adsorptionsphasen der Hauptadsorber geschaltet werden. In diesem Betriebsfall sind demnach jeweils zwei Hauptadsorber einem Hilfsadsorber vorübergehend zugeordnet, dessen Adsorptionsphase die zeitlich auseinanderliegenden Adsorptionsphasen der beiden Hauptadsorber überbrückt.

Während bei dem bekannten Druckwechseladsorptionsverfahren sämtliche Adsorber jeweils identische Schaltzyklen durchlaufen, die nur gegeneinander phasenverschoben sind, kann das erfindungsgemässe Verfahren so ausgebildet sein, dass die Schaltzyklen innerhalb der Gruppe der Hilfsadsorber und/oder innerhalb der Gruppe der Hauptadsorber in jeweils voneinander abweichender Weise ablaufen. Eine derartige Verfahrensweise kann beispielsweise zweckmässig sein, wenn die Anzahl der Hauptadsorber zu der Anzahl der Hilfsadsorber in einem ungeraden Verhältnis steht und einerseits keine Totzeiten auftreten sollen und andererseits die Verwendung von Produktgas zum Spülen zu vermeiden ist.

Das erfindungsgemässe Verfahren lässt sich, wie aus den folgenden Ausführungsbeispielen hervorgeht, bereits auf eine Adsorptionsvorrichtung mit nur drei Adsorbern in vorteilhafter Weise anwenden.

Ein Verfahren mit drei Adsorbern ist beispielsweise aus der US-A-3338030 vorbekannt. Es arbeitet mit drei zyklisch umschaltbaren, gleichberechtigten Adsorbern, die jeweils nacheinander eine Adsorptionsphase und eine Regenerationsphase durchlaufen. Die Regenerationsphase ist in fünf Stufen unterteilt, nämlich zwei Entspannungsstufen, eine Spülung und zwei Druckaufbaustufen. Während der ersten Entspannungsstufe eines Adsorbers befindet sich jeweils einer der beiden anderen Adsorbern in der ersten Druckaufbaustufe, und die während der ersten Entspannungsstufe gewonnene Gasfraktion wird zum Druckausgleich mit dem in der ersten Druckaufbaustufe befindlichen Adsorber verwendet. Die während der zweiten Entspannungsstufe erhaltene Gasfraktion wird als Restgas abgeführt. Die Spülung erfolgt mit Produktgas, die erste Druckaufbaustufe mit der beim Entspannen des dritten Adsorbers während der ersten Entspannungsstufe gewonnenen Gasfraktion, und für die zweite und endgültige Druckaufbaustufe kann alternativ Rohgas oder Produktgas verwendet werden.

Diese im engen Zusammenhang mit der Verwendung nur dreier gleichberechtigter Adsorber stehende Verfahrensführung hat zur Folge, dass das nach Beendigung der Adsorptionsphase im Lückenvolumen eines Adsorbers verbleibende Gas nur relativ schlecht ausgenutzt wird. Es kann nämlich jeweils nur die während der ersten Entspannungsstufe gewonnene Gasfraktion weiter genutzt werden, was durch Druckausgleich mit dem gerade in der ersten Druckaufbaustufe befindlichen Adsorber geschieht. Der dabei erzielbare Zwischendruck macht etwa die Hälfte des Adsorptionsdruckes aus. Das darüber hinaus noch im Adsorber befindliche, nicht adsorbierte Gasvolumen ist nicht weiter verwendbar und wird als Restgas abgeführt. Weiterhin muss als nachteilig angesehen werden, dass beim bekannten Verfahren mit Produktgas gespült werden muss, wenn kein inertes Fremdgas zur Verfügung steht. Das während der Spülung mit der desorbierenden Komponente verunreinigte Produktgas wird ebenfalls als Restgas abgeführt. All dies wirkt sich negativ auf die Produktgasausbeute aus, die somit noch verbesserungsbedürftig ist.

Gemäss der Erfindung kann ein derartiges, mit drei Adsorbern betriebenes Verfahren nun dadurch verbessert werden, dass zwei Hauptadsorber und ein mit halbierter Periodendauer betriebener Hilfsadsorber verwendet und die Adsorptionsphasen des Hilfsadsorbers jeweils zwischen die Adsorptionsphasen der Hauptadsorber geschaltet werden, wobei die beim Entspannen des Hilfsadsorbers während der ersten Entspannungsstufe gewonnene Gasfraktion zum Spülen jeweils eines der beiden Hauptadsorber und die beim Entspannen eines Hauptadsorbers während der ersten Entspannungsstufe gewonnene Gasfraktion beim Druckaufbau des jeweils anderen Hauptadsorbers verwendet wird.

Mit Hilfe dieser Massnahme ist, wie aus dem entsprechenden, weiter unten angeführten Ausführungsbeispiel hervorgeht, eine deutliche Verbesserung der Produktgasausbeute erzielbar.

Dies liegt vor allem daran, dass zum Spülen der Hauptadsorber kein Produktgas mehr abgezweigt zu werden braucht, sondern als Spülgas für die Hauptadsorber vielmehr die während der ersten Entspannungsstufe des Hilfsadsorbers gewonnene Gasfraktion verwendet werden kann. Insbesondere dann, wenn verhältnismässig grosse Spülgasmengen benötigt werden, weil die adsorbierte Komponente nur schwer desorbierbar ist, erweist sich diese Möglichkeit als günstig. Der Druck des Hilfsadsorbers kann während der ersten Entspannungsstufe nämlich wesentlich weiter gesenkt werden als dies bei den Hauptadsorbern möglich ist, da der Hilfsadsorber während dieser Verfahrensstufe mit dem gerade auf dem niedrigsten Verfahrensdruck befindlichen Hauptadsorber in Verbindung steht. Der Hilfsadsorber kann somit während der ersten Entspannungsstufe nahezu auf den Druck entspannt werden, der während der Spülung im entsprechenden Hauptadsorber herrscht. Damit kann im Bedarfsfalle fast das gesamte im Lückenvolumen des Hilfsadsorbers befindliche Gas nutzbringend anstelle von Produktgas verwendet werden. Nach Beendigung der Adsorptionsphase eines Hauptadsorbers übernimmt der Hilfsadsorber das Rohgas, und wenn dieser seine Adsorptionsphase, die wesentlich kürzer als die eines Hauptadsorbers ist, beendet hat, wird das Rohgas vom zweiten Hauptadsorber übernommen. Von diesem wird wieder auf den Hilfsadsorber um- und danach auf den ersten Hauptadsorber zurückgeschaltet.

Gemäss einer weiteren, auf ein mit drei Adsorbern betriebenes Verfahren gerichteten Ausführungsform der Erfindung ist vorgesehen, dass die Entspannung des Hilfsadsorbers in mindestens drei Entspannungsstufen vollzogen und die während der zweiten Entspannungsstufe gewonnene Gasfraktion in der ersten Druckaufbaustufe des während der ersten Entspannungsstufe gespülten Hauptadsorbers verwendet wird.

Diese Variante ist insbesondere dann anwendbar, wenn die für einen Hauptadsorber benötigte Spülgasmenge geringer ist als im oben geschilderten Fall. Auch diese Ausführungsform der Erfindung erweist sich als vorteilhaft, da zumindest das im Lückenvolumen des Hilfsadsorbers befindliche Gas auch hier noch besser ausgenutzt wird als beim bekannten Verfahren, nämlich einerseits zur direkten Einsparung von Produktgas zu Spülzwecken und andererseits durch sehr weitgehende Absenkung des Druckes während der zweiten Entspannungsstufe, ohne dass das dabei gewonnene Gas als Restgas verloren gegeben werden müsste.

Die geschilderte spezielle Variante des erfindungsgemässen Verfahrens stellt somit eine beträchtliche Verbesserung der mit drei Adsorbern arbeitenden Adsorptionsverfahren dar. Eine gesteigerte Produktausbeute liess sich in einem solchen Fall bisher lediglich durch eine Erhöhung der Adsorberanzahl erreichen, was einen erheblichen Mehraufwand mit sich brachte. Ausserdem wird eine Adsorptionsanlage durch Erhöhung der Adsorberzahl stets im Aufbau komplizierter und damit störanfälliger. Nachteile dieser Art werden mit Hilfe der geschilderten Variante des erfindungsgemässen Verfahrens auf einfache und wirtschaftliche Weise umgangen.

Das erfindungsgemässe Verfahren kann beispielsweise zur Reinigung von Rohwasserstoff, zur Sauergasabtrennung aus Synthesegasen, zur Entfernung einzelner Kohlenwasserstoffe aus gasförmigen Kohlenwasserstoffgemischen oder zur Sauerstoffgewinnung aus Luft herangezogen werden. Es ist jedoch in seiner Anwendbarkeit keineswegs hierauf beschränkt, sondern ist vielmehr überall dort einsetzbar, wo gas- bzw. dampfförmige Komponenten mit ausreichend unterschiedlicher Adsorbierbarkeit voneinander zu trennen sind. Ebenso können alle üblichen Adsorptionsmittel im Rahmen des erfindungsgemässen Verfahrens eingesetzt werden, so z.B. Silikagel, aktivierte Tonerde, Aktivkohle, zeolithische Molekularsiebe oder Kohlenstoffmolekularsiebe.

Aus der DE-A-2752801 ist zwar schon ein Adsorptionsverfahren bekannt, bei dem neben zwei Hauptadsorbern noch ein zusätzlicher Adsorber vorgesehen ist, der jedoch eine völlig andere Funktion erfüllt als die erfindungsgemäss vorgesehenen Hilfsadsorber. Das bekannte Verfahren verwendet ein Vorrats-Adsorptionsbett, das überhaupt nicht mit Rohgas beaufschlagt wird und das lediglich als Speicherbehälter für Gas verwendet wird, das während einer Gleichstromspannungsphase der Hauptadsorber anfällt. Demgemäss wird das während einer Verfahrensstufe anfallende Gleichstromentspannungsgas aus einem Adsorber in den Vorratsadsorber geleitet und dort solange gespeichert, wie der Adsorber gespült wird. In der anschliessenden Verfahrensstufe wird dann das gespeicherte Gas aus dem Vorratsadsorber wieder in den Adsorber zurückgeführt. In entsprechender Weise wird der Vorratsadsorber auch mit dem zweiten Adsorber kombiniert. Als Vorratsbehälter wird offenbar nur deshalb ein Adsorber verwendet, weil dieser bei der Rückführung des gespeicherten Entspannungsgases ermöglicht, dass das aus dem Vorratsadsorber austretende Gas eine zeitlich veränderliche Gaszusammensetzung aufweist. Dennoch entspricht der Vorratsadsorber seinem Wesen nach nur einem Zwischenspeicher für Entspannungsgas, das im Adsorptionsverfahren selbst wieder verwendet werden soll, für das jedoch während des Zeitpunkts seines Anfalls kein Abnehmer zur Verfügung steht.

Anhand der Figuren sollen im folgenden verschiedene Ausführungsbeispiele des erfindungsgemässen Verfahrens näher erläutert werden: Es zeigen

Figur 1 die schematische Darstellung einer aus zwei Hauptadsorbern und einem Hilfsadsorber bestehenden Adsorptionsanlage zur Durchführung einer Variante des erfindungsgemässen Verfahrens,

Figur 2 ein Druck-Zeit-Diagramm zur Variante gemäss Figur 1,

Figur 3 ein Zeitablaufschema zur Variante gemäss Figur 1,

Figur 4 ein Zeitablaufschema einer Verfahrensvariante für vier Haupt- und zwei Hilfsadsorber,

Figur 5 ein Zeitablaufschema einer Verfahrensvariante für vier Haupt- und vier Hilfsadsorber,

Figur 6 ein Zeitablaufschema einer Verfahrensvariante für einen Haupt- und drei Hilfsadsorber.

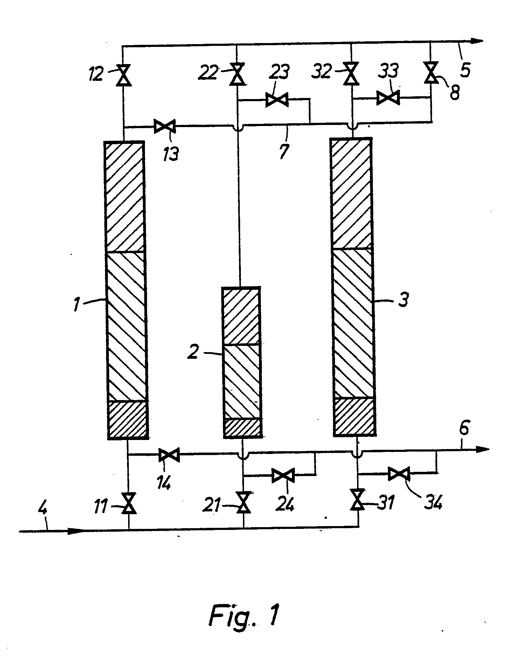

In Figur 1 sind die beiden Hauptadsorber mit 1 und 3, der Hilfsadsorber mit 2 beziffert. Die Einlassseiten der Adsorber sind über Ventile 11, 21 und 31 mit der Leitung 4 für das Rohgas, die Auslassseiten der Adsorber über Ventile 12, 22 und 32 mit der Abführleitung 5 für das gereinigte Produktgas verbunden. Die über ein Ventil 8 mit der Produktgasleitung 5 verbundene Leitung 7 dient der Abzweigung von Produktgasanteilen sowie der Zuspeisung derselben in die Auslassseiten der Adsorber über Ventile 13, 23 und 33. Verunreinigte Restgase werden über Ventile 14, 24 und 34 sowie Leitung 6 von den Einlassseiten der Adsorber her abgezogen.

Ein zu 71 Vol-% aus Wasserstoff, zu 2,5 Vol-% aus Methan, zu 13 Vol-% aus Kohlenmonoxid und zu 13,5 Vol-% aus Kohlendioxid bestehendes Rohgas soll unter Gewinnung von 6,7 kMol/h Wasserstoff mit einer Reinheit von 99,99 Vol-% behandelt werden. Die drei Adsorber 1, 2 und 3 sind, von den Einlassseiten her gesehen, je mit drei aufeinanderfolgenden Schichten verschiedener Adsorptionsmittel gefüllt: einer ersten Schicht aus aktivierter Tonerde, die der Adsorption eventuell vorhandener Wasserspuren dient, einer zweiten Schicht aus Aktivkohle zum Zurückhalten des Methans und des Kohlendioxids sowie einer dritten Schicht aus zeolithischem Molekularsieb 5A zur Adsorption des Kohlenmonoxids. Die Adsorberbehälter haben jeweils einen Durchmesser von 0,8 m, die Hauptadsorber 1 und 3 weisen eine Füllhöhe von 4,1 m und der Hilfsadsorber eine Füllhöhe von 2,1 m auf. Die Hauptadsorber enthalten insgesamt je 1300 kg, der Hilfsadsorber insgesamt 660 kg Adsorptionsmittel.

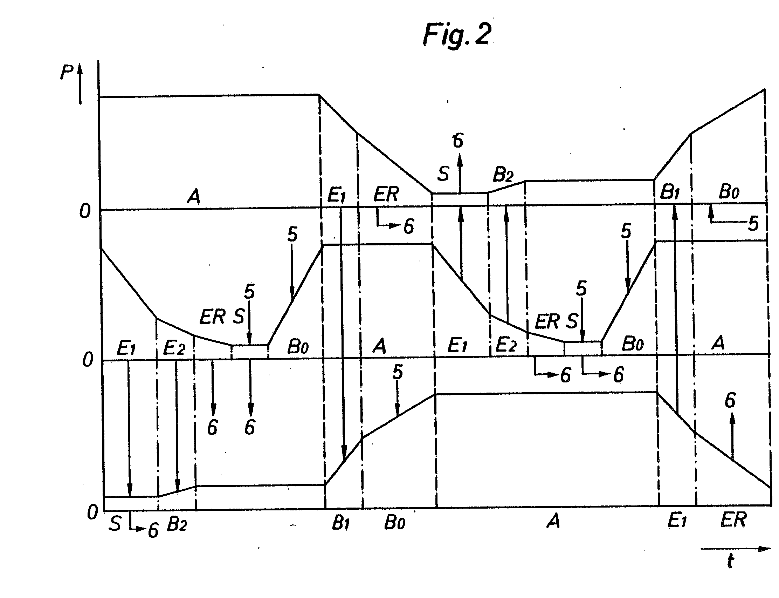

Der zeitliche Ablauf der Verfahrensvariante soll mit Hilfe des Druck-Zeit-Diagramms der Figur 2 verdeutlicht werden. In dieser Figur bezieht sich die obere Kurve auf den Hauptadsorber 1, die mittlere Kurve auf den Hilfsadsorber 2 und die untere Kurve auf den anderen Hauptadsorber 3. Aufgetragen ist jeweils der Druck p über der Zeit t.

Zu Beginn befindet sich der Hauptadsorber 1 in der Adsorptionsphase A. Das Rohgas strömt durch Leitung 4 und das geöffnete Ventil 11 in den Adsorber 1 ein, wird dort von Wasserspuren, Methan, Kohlendioxid und Kohlenmonoxid befreit und verlässt als hochreiner Wasserstoff die Anlage über das geöffnete Ventil 12 durch Leitung 5. Der Adsorptionsdruck beträgt 15 bar, die Temperatur des Rohgases 303 K.

Zu Beginn der Adsorptionsphase A des Hauptadsorbers 1 hat der Hilfsadsorber 2 gerade seine Adsorptionsphase beendet. Der Hilfsadsorber tritt nunmehr in die erste Entspannungsstufe E1 ein. Er wird dabei im Gleichstrom bei geöffnetem Ventil 23 auf einen Druck von 6 bar entladen, wobei das ausströmende Gasvolumen durch Leitung 7 und das geöffnete Ventil 33 in den auf dem niedrigsten Verfahrensdruck von 1,7 bar, dem Desorptions- bzw. Spüldruck, befindlichen Hauptadsorber 3 einströmt. Hierbei erfolgt die Desorption der adsorbierten Komponenten im Hauptadsorber 3 im Gegenstrom unter Aufrechterhaltung des genannten niedrigsten Druckes von der Auslassseite her, die über das geöffnete Ventil 34 mit der Restgasleitung 6 verbunden ist. Nach Erreichen des genannten Zwischendruckes von 6 bar im Hilfsadsorber 2 wird das Ventil 34 geschlossen, wobei das aus dem Hilfsadsorber ausströmende Gas nunmehr zu einem Druckanstieg im Hauptadsorber 3 führt. Der Ausgleichsdruck beträgt 3,1 bar. Sobald dieser erreicht ist, hört die Strömung auf und der Hauptadsorber 3 wird bis zum Ende der Adsorptionsphase des Hauptadsorbers 1 durch Schliessen des Ventils 33 isoliert. Bei geschlossenem Ventil 23 und geöffnetem Ventil 24 wird der Hilfsadsorber 2 anschliessend einer dritten und letzten Entspannungsstufe ER bis auf einen Druck von 1,7 bar unterzogen. Die dabei freiwerdende Gasfraktion wird ebenfalls über die Restgasleitung 6 abgezogen. Dann wird der Hilfsadsorber bei geöffneten Ventilen 23 und 8 einer Spülung S mit von der Leitung 5 abgezweigtem Produktgas unterzogen. Dies geschieht bei geöffnetem Ventil 24 unter Aufrechterhaltung des Druckes von 1,7 bar von der Einlassseite her. Schliesslich wird der Hilfsadsorber 2 in einer einzigen Druckaufbaustufe BO bei nunmehr geschlossenem Ventil 24 mit Hilfe von Produktgas wieder auf den Adsorptionsdruck von 15 bar gebracht.

Während der Hauptadsorber 1 also seine Adsorptionsphase durchläuft, wird der Hilfsadsorber 2 vollständig regeneriert, wobei der Hauptadsorber 3 gleichzeitig nur einen Teilabschnitt seiner Regenerationsphase, nämlich die Spülung S und die erste Druckaufbauphase B2 durchläuft.

Anschliessend übernimmt der Hilfsadsorber 2 das Rohgas bei geöffneten Ventilen 21 und 22. Der Hauptadsorber 1, dessen Adsorptionsphase nunmehr beendet ist, wird bei geschlossenen Ventilen 11, 12 und 14 und geöffneten Ventilen 13 und 33 über Leitung 7 mit dem Hauptadsorber 3 verbunden. Geschlossene Ventile 31, 32 und 34 sorgen dafür, dass ein Druckausgleich zwischen dem zunächst auf 15 bar befindlichen Hauptadsorber 1 und dem auf dem untersten Zwischendruck von 3,1 bar befindlichen Hauptadsorber 3 stattfinden kann. Dies führt zu einem Ausgleichsdruck von 9,4 bar. Nach erfolgtem Druckausgleich, der ersten Entspannungsstufe E1 des Hauptadsorbers 1 bzw. der zweiten Druckaufbaustufe B1 des Hauptadsorbers 3 entsprechend, wird Ventil 13 geschlossen und Ventil 8 geöffnet. Der Hauptadsorber 1 wird während seiner zweiten Entspannungsstufe ER über das nunmehr geöffnete Ventil 14 und die Restgasleitung 6 auf den niedrigsten Verfahrensdruck von 1,7 bar entladen, während der Hauptadsorber 3 gleichzeitig in seiner dritten und letzten Druckaufbaustufe BO mit Hilfe abgezweigten Produktgases auf den Adsorptionsdruck von 15 bar gebracht wird.

Nunmehr kann der Hauptadsorber 3 das Rohgas übernehmen, während der Hilfsadsorber wiederum unter Spülung S des Hauptadsorbers 1 und Druckausgleich E2/B2 mit demselben seine Regenerationsphase durchläuft, die gleichzeitig mit der Adsorptionsphase des Hauptadsorbers 3 beendet sein wird.

Der weitere, periodisch sich wiederholende Ablauf wird mit Hilfe des Druck-Zeit-Diagramms der Figur 2 deutlich. Die Periodendauer beträgt dabei für die Hauptadsorber 1 und 3 ca. 20 Minuten und für den Hilfsadsorber 2 ca. 10 Minuten.

Die Ausbeute an reinem Wasserstoff beträgt nach diesem Verfahren 58%. Demgegenüber kann mit einer herkömmlichen Anlage, die mit drei gleichberechtigten Adsorbern und gleichen Schaltzyklen gemäss dem weiter oben erwähnten vorbekannten Verfahren der US-A-3338030 arbeitet, für den gleichen Anwendungsfall nur eine Ausbeute an reinem Wasserstoff von ca. 45 bis 50% erzielt werden.

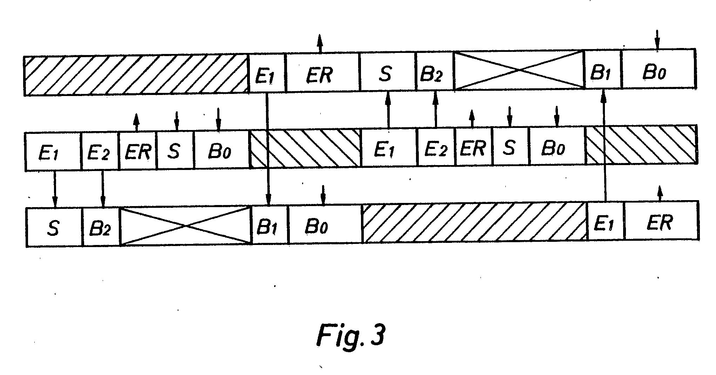

Das Zeitablaufschema der Figur 3 gibt noch einmal in übersichtlicher Weise wieder, wie die Schaltzyklen der Haupt- sowie des Hilfsadsorbers ablaufen und auf welche Weise die drei Adsorber funktionell miteinander verknüpft sind. Der Hilfsadsorber ist durch den mittleren Balken, die beiden Hauptadsorber sind durch den oberen sowie den unteren Balken repräsentiert. Die Adsorptionsphasen sind schraffiert dargestellt, die Totphasen, in denen die Hauptadsorber jeweils völlig isoliert sind, sind durch diagonal gekreuzte Striche gekennzeichnet. Die Entspannungsgasströme fliessen in Richtung der durchgezogenen Pfeile, jeweils aus einer Entspannungsstufe E1, E2 kommend und in eine Druckaufbaustufe B1, B2 bzw. eine Spülstufe S gelangend. Das während der letzten Entspannungsstufe ER jeweils ausströmende Gas gelangt in die Restgasleitung. Die Spülung S des Hilfsadsorbers sowie der letzte Druckaufbau B0 aller drei Adsorber erfolgen mit Produktgas. Die Zeit verläuft von links nach rechts.

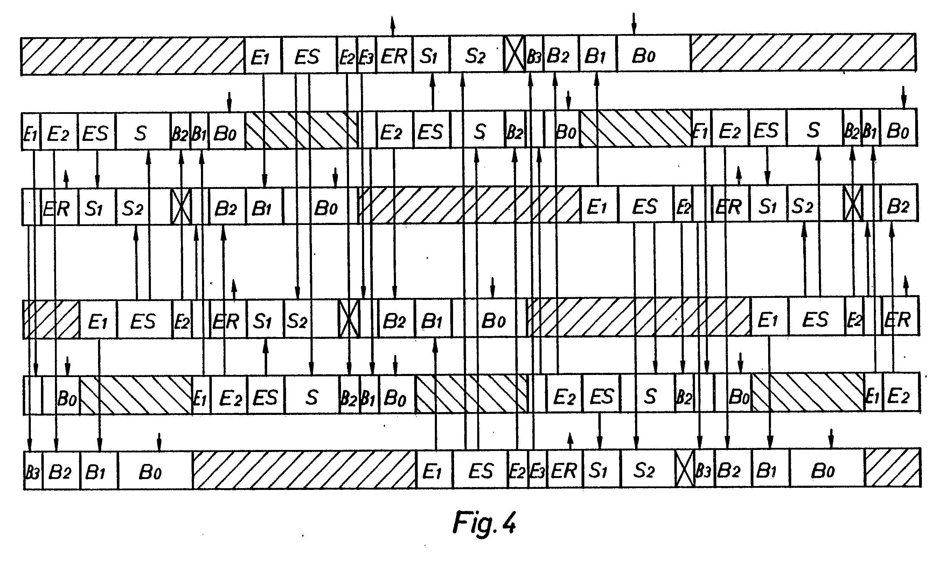

Die Figur 4 zeigt ein Zeitablaufschema einer weiteren Verfahrensvariante, die zunächst apparativ einer Verdoppelung des oben geschilderten, mit zwei Hauptadsorbern und einem Hilfsadsorber arbeitenden Verfahrens entspricht. Trotzdem liegt hier eine besondere Verfahrensführung vor, die gegenüber der oben geschilderten in höherem Masse integriert ist. Insbesondere wird hier bei sämtlichen Adsorbern Produktgas nur noch für die letzte Druckaufbauphase B0 verwendet. Sämtliche Adsorber werden mit Entspannungsgas gespült, und die Menge des während der letzten Entspannungsstufen ER insgesamt in die Restgasleitung abgegebenen Gases ist stark reduziert, weil einerseits eine letzte Entspannung in die Restgasleitung bei den Hilfsadsorbern gar nicht mehr auftritt und andererseits das Entspannungsgas der Hauptadsorber bis zu sehr niedrigen Drükken zum Druckaufbau und Spülen jeweils anderer Adsorber verwendet wird, bevor die Stufe ER einsetzt.

Von den drei oberen sowie den drei unteren Balken der Figur 4 entsprechen jeweils die mittleren Balken den Hilfsadsorbern, die übrigen vier Balken den Hauptadsorbern. Alle vier Hauptadsorber sowie die beiden Hilfsadsorber durchlaufen jeweils identische Schaltzyklen. Innerhalb der beiden Dreiergruppen liegen die Adsorptionsphasen des Hilfsadsorbers zeitlich jeweils zwischen den Adsorptionsphasen der beiden Hauptadsorber. Das während der letzten Entspannungsstufe ES der Hilfsadsorber ausströmende Gas dient zum Spülen der Hauptadsorber während einer ersten Spülphase S1. Das Entspannungsgas der auf die erste Entspannungsstufe E1 der Hauptadsorber folgenden Entspannungsstufe ES wird zum Spülen sowohl eines Haupt- als auch eines Hilfsadsorbers verwendet. Dies geschieht in Parallelschaltung während der Spülphasen S2 bzw. S.

Während die Verfahrensvariante der Figuren 1 bis 3 durch besonders gute Ausnutzung des Entspannungsgases des Hilfsadsorbers gekennzeichnet ist, ist der Ausnutzungsgrad der Entspannungsgase der Verfahrensvariante gemäss der Figur 4 bei Haupt- und Hilfsadsorbern nahezu ausgewogen. Die Entspannungsgase der Hilfsadsorber, die während der insgesamt drei Entspannungsstufen E1, E2 sowie ES ausströmen, werden nämlich vollständig zum Druckaufbau bzw. Spülen anderer Adsober verwendet, während die aus den insgesamt fünf Entspannungsstufen E1, ES, E2, E3 sowie ER der Hauptadsorber austretenden Gase mit Ausnahme der letzten Entspannungsstufe ER sämtlich ebenfalls für die genannten Zwecke genutzt werden.

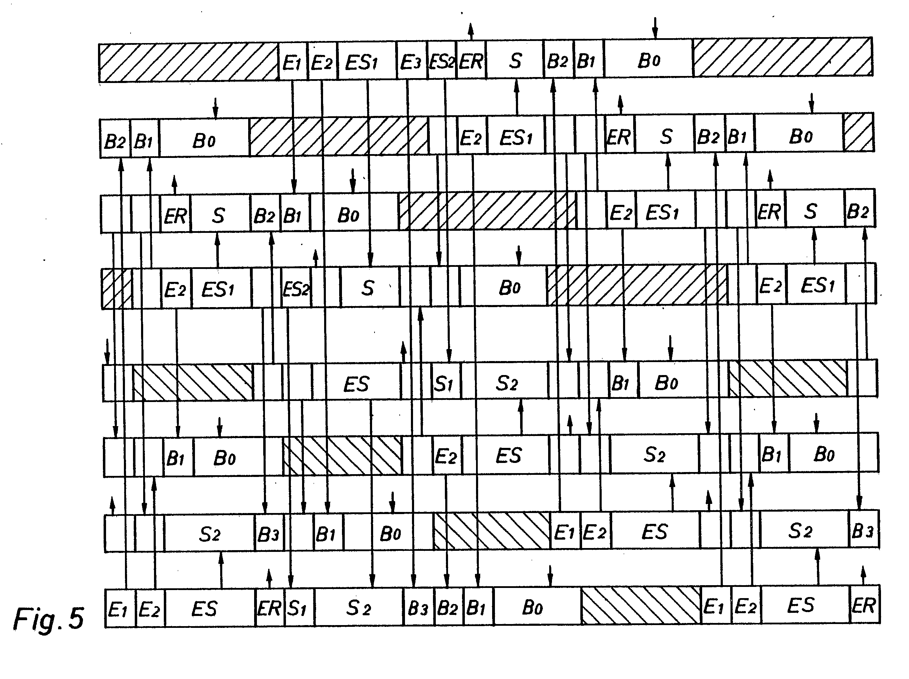

Die im Zeitablaufschema der Figur 5 dargestellte Verfahrensvariante wird mit vier Haupt- und vier Hilfsadsorbern betrieben. Die beiden Adsorbergruppen sind jeweils durch die vier oberen bzw. die vier unteren Balken repräsentiert. Die Adsorptionsphasen der Hauptadsorber überlappen sich gegenseitig jeweils am Phasenbeginn sowie -ende. Zwischen die Überlappungszeiträume der Adsorptionsphasen der Hauptadsorber sind jeweils die Adsorptionsphasen der Hilfsadsorber geschaltet. Die Verfahrensführung ergibt gegenüber der Verfahrensvariante gemäss Figur 4 eine höhere Produktausbeute. Die Entspannungsgase werden insgesamt besser genutzt, da die Anzahl der Entspannungsstufen für die Haupt- und Hilfsadsorber von fünf bzw. drei nunmehr auf sechs bzw. vier erhöht ist. Die Menge des während der letzten Druckaufbauphasen B0 benötigten Produktgases ist dadurch entsprechend reduziert. Die Haupt- und Hilfsadsorber durchlaufen auch hier jeweils identische Schaltzyklen.

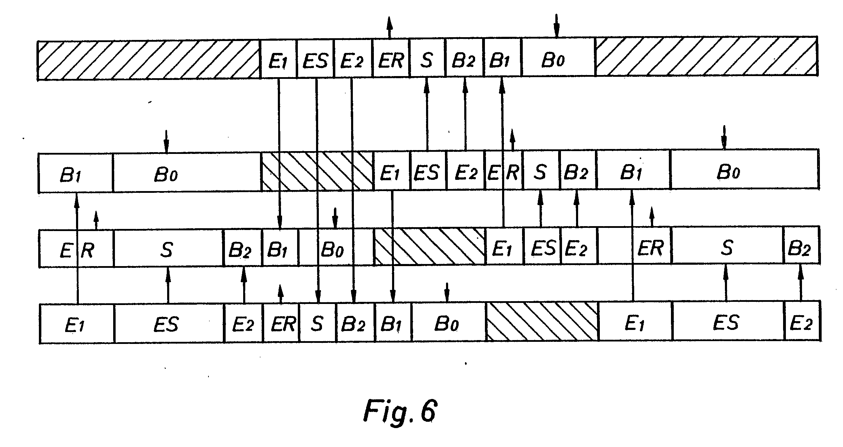

Die Verfahrensvariante gemäss der Figur 6 zeichnet sich hinsichtlich der Adsorberzahl durch ein Übergewicht der Hilfsadsorber aus. Der obere Balken repräsentiert den einzigen Hauptadsorber, die drei unteren Balken die insgesamt drei Hilfsadsorber. Die Adsorptionsphasen aller drei Hilfsadsorber werden nacheinander jeweils zwischen zwei Adsorptionsphasen des Hauptadsorbers geschaltet. Bei beiden Adsorberarten wird das während der letzten Stufe ER der insgesamt vier Entspannungsstufen abströmende Gas in die Restgasleitung geführt. Produktgas wird lediglich für den letzten Druckaufbau B0 benötigt. Die drei Hilfsadsorber durchlaufen jeweils unterschiedliche Schaltzyklen, da sonst Totzeiten auftreten bzw. Produktgas zum Spülen herangezogen werden müsste.

Die dargestellten und erläuterten Verfahrensvarianten schränken die Erfindung in keiner Weise ein. Die der Erfindung zugrundeliegenden allgemeinen Prinzipien beinhalten vielmehr eine Vielzahl weiterer Kombinationsmöglichkeiten. Dies gilt sowohl hinsichtlich der Anzahl der verwendeten Adsorber jeder der beiden Adsorberarten als auch hinsichtlich der speziellen Verfahrensführung.

**Patentansprüche**

1. Adiabatisches Adsorptionsverfahren zur Gasreinigung oder Gastrennung unter Verwendung mehrerer umschaltbarer Adsorber, von denen jeder eine Adsorptionsphase, während der er mit einem Rohgas beaufschlagt wird, und nachfolgend eine Regenerierung durchläuft, die durch Druckwechsel in mindestens zwei Entspannungsstufen und mindestens einer Druckaufbaustufe mit dazwischen geschalteter Spülung erfolgt, dadurch gekennzeichnet, dass mindestens einer der Adsorber als Hilfsadsorber mit gegenüber den Hauptadsorbern verringerter Dauer der Adsorptionsphase oder mit gegenüber den Hauptadsorbern verringerter Adsorptionsmittelbeschickung und verringerter Dauer der Adsorptionsphase betrieben werden.

2. Verfahren nach Anspruch 1, dadurch gekennzeichnet, dass der oder die Hilfsadsorber mit verkürzter Periodendauer betrieben werden.

3. Verfahren nach Anspruch 1 oder 2, dadurch gekennzeichnet, dass mindestens eine der Entspannungs- und/oder der Druckaufbaustufen der Haupt- und/oder der Hilfsadsorber im Druckausgleich mit der jeweils anderen Adsorberart betrieben wird.

4. Verfahren nach einem der Ansprüche 1 bis 3, dadurch gekennzeichnet, dass Entspannungsgas aus mindestens einer der Entspannungsstufen der Haupt- und/oder der Hilfsadsorber zum Spülen eines Adsorbers der jeweils anderen Adsorberart verwendet wird.

5. Verfahren nach einem der Ansprüche 1 bis 4, dadurch gekennzeichnet, dass die Adsorptionsphasen jedes Hauptadsorbers jeweils zu Beginn und gegen Ende von Adsorptionsphasen anderer Hauptadsorber zeitlich überlappt und unmittelbar zwischen die Überlappungszeiträume die Adsorptionsphasen von Hilfsadsorbern geschaltet werden.

6. Verfahren nach einem der Ansprüche 1 bis 4, dadurch gekennzeichnet, dass die Adsorptionsphasen der verschiedenen Hauptadsorber zeitlich nicht direkt aufeinanderfolgen und die Adsorptionsphasen der Hilfsadsorber zwischen die Adsorptionsphasen der Hauptadsorber geschaltet werden.

7. Verfahren nach einem der Ansprüche 1 bis 6, dadurch gekennzeichnet, dass die Schaltzyklen innerhalb der Gruppe der Hilfsadsorber und/oder innerhalb der Gruppe der Hauptadsorber in jeweils voneinander abweichender Weise ablaufen.

8. Verfahren nach einem der Ansprüche 1 bis 4 sowie 6, dadurch gekennzeichnet, dass zwei Hauptadsorber und ein mit halbierter Periodendauer betriebener Hilfsadsorber verwendet und die Adsorptionsphasen des Hilfsadsorbers jeweils zwischen die Adsorptionsphasen der Hauptadsorber geschaltet werden, wobei die beim Entspannen des Hilfsadsorbers während der ersten Entspannungsstufe gewonnene Gasfraktion zum Spülen jeweils eines der beiden Hauptadsorbers und die beim Entspannen eines Hauptadsorbers während der ersten Entspannungsstufe gewonnene Gasfraktion beim Druckaufbau des jeweils anderen Hauptadsorbers verwendet wird.

9. Verfahren nach Anspruch 8, dadurch gekennzeichnet, dass die Entspannung des Hilfsadsorbers in mindestens drei Entspannungsstufen vollzogen und die während der zweiten Entspannungsstufe gewonnene Gasfraktion in der ersten Druckaufbaustufe des während der ersten Entspannungsstufe gespülten Hauptadsorbers verwendet wird.

## Claims

1. An adiabatic adsorption process for the purification or separation of gases using a plurality of switchable adsorbers, each of which passes through an adsorption phase, during which it is supplied with crude gas, and subsequently through a regeneration phase which is effected by a pressure swing effected in at least two expansion stages and at least one pressure build-up stage with an interposed purging step, characterised in that at least one of the adsorbers is operated as an auxiliary adsorber for a duration of the adsorption phase which is reduced in relation to that of the main adsorbers, or with an adsorbent charge which is reduced in relation to that of the main adsorbers, and for a reduced duration of the adsorption phase.

2. A process as claimed in Claim 1, characterised in that the auxiliary adsorber or adsorbers is or are operated with a shortened period.

3. A process as claimed in Claim 1 or Claim 2, characterised in that at least one of the expansion stages and/or of the pressure build-up stages of the main and/or auxiliary adsorbers is operated in pressure equilizatin with the other kind of adsorber.

4. A process as claimed in one of Claims 1 to 3, characterised in that the expanded gas from at least one of the expansion stages of the main and/or auxiliary adsorbers is used for purging an adsorber of the other kind.

5. A process as claimed in one of Claim 1 to 4, characterised in that the adsorption phases of each main adsorber are overlapped timewise, respectively at the beginning and towards the end, by adsorption phases of other main adsorbers, and the adsorption phases of auxiliary adsorbers are switched between the overlapping periods.

6. A process as claimed in one of Claims 1 to 4, characterised in that the adsorption phases of the various main adsorbers are not directly consecutive in terms of time and the adsorption phases of the auxiliary adsorbers are switched between the adsorption phases of the main adsorbers.

7. A process as claimed in one of Claims 1 to 6, characterised in that the switching cycles within the group of the auxiliary adsorbers and/or within the group of the main adsorbers, are carried out in a different manner in each case.

8. A process as claimed in one of Claims 1 to 4 and 6, characterised in that two main adsorbers and one auxiliary adsorber which is operated for a halved time period are used, and the adsorption phases of the auxiliary adsorber are respectively switched between the adsorption phases of the main adsorbers, the gas fraction which is obtained during the expansion of the auxiliary adsorber at the time of the first expansion stage being used for purging one of the two main adsorbers, and the gas fraction which is obtained during the expansion of a main adsorber at the time of the first expansion stage, being used for the pressure build-up of the other main adsorber.

9. A process as claimed in Claim 8, characterised in that the expansion of the auxiliary adsorber is effected in at least three expansion stages, and the gas fraction which is obtained during the second expansion stage, is used in the first pressure build-up stage of the main adsorber which is purged during the first expansion stage.

## Revendications

1. Procédé de purification de gaz ou de séparation de gaz par adsorptions adiabatiques utilisant plusieurs adsorbeurs commutables dont chacun traverse une phase d'adsorption pendant laquelle on y admet un gaz brut et ensuite une phase de régénération qui est obtenue par changement de pression en au moins deux étapes de détente et au moins une étape de montée en pression entre lesquelles est intercalée une purge, caractérisé en ce que l'on fait fonctionner au moins l'un des adsorbeurs comme adsorbeur auxiliaire avec une durée de la phase d'adsorption réduite par rapport à celle des adsorbeurs principaux ou avec un garnissage d'agents d'adsorption moindre que celui des adsorbeurs principaux et une durée réduite de la phase d'adsorption.

2. Procédé suivant la revendication 1, caractérisé en ce que le ou les adsorbeurs principaux fonctionnent avec une durée de période réduite.

3. Procédé suivant la revendication 1 ou 2, caractérisé en ce que au moins l'une des étapes de détente et/ou de montée en pression des adsorbeurs principaux et/ou des adsorbeurs auxiliaires fonctionne en égalisation de pression chaque fois avec l'autre espèce d'adsorbeur.

4. Procédé suivant l'une des revendications 1 à 3, caractérisé en ce que le gaz de détente d'au moins l'une des étapes de détente des adsorbeurs principaux et/ou des adsorbeurs auxiliaires est utilisé à la purge chaque fois d'un adsorbeur de l'autre espèce d'adsorbeur.

5. Procédé suivant l'une des revendications 1 à 4, caractérisé en ce que les phases d'adsorption de chaque adsorbeur principal se recouvrent chaque fois, dans le temps, au début et vers la fin des phases d'adsorption des autres adsorbeurs principaux et que, immédiatement entre les intervalles de recouvrement, sont intercalées les phases d'adsorption des adsorbeurs auxiliaires.

6. Procédé suivant l'une des revendications 1 à 4, caractérisé en ce que les phases d'adsorption des divers adsorbeurs principaux ne se succèdent pas directement les unes aux autres dans le temps, et que les phases d'adsorption des adsorbeurs auxiliaires sont intercalées dans le temps, entre les phases d'adsorption des adsorbeurs principaux.

7. Procédé suivant l'une des revendications 1 à 6, caractérisé en ce que les cycles de fonctionnement, à l'intérieur du groupe des adsorbeurs auxiliaires et/ou à l'intérieur du groupe des adsorbeurs principaux, se déroulent chaque fois d'une façon différente l'une de l'autre.

8. Procédé suivant l'une des revendications 1 à 4, ainsi que 6, caractérisé en ce que l'on utilise deux adsorbeurs principaux et un adsorbeur auxiliaire fonctionnant avec une durée de période réduite de moitié et que les phases d'adsorption de l'adsorbeur auxiliaires sont, chaque fois, intercalées entre les phases d'adsorption des adsorbeurs principaux, la fraction gazeuse obtenue par la détente de l'adsorbeur auxiliaire pendant la première étape de détente étant, chaque fois, utilisée pour la purge de l'un des deux adsorbeurs principaux et la fraction gazeuse obtenue lors de la détente d'un adsorbeur principal pendant la première étape de détente étant, chaque fois, utilisée lors de la montée en pression de l'autre adsorbeur principal.

9. Procédé suivant la revendication 8, caractérisé en ce que la détente de l'adsorbeur auxiliaire s'effectue en au moins trois phases de détente et que la fraction gazeuse obtenue pendant la seconde étape de détente est utilisée dans la première étape de montée en pression de l'adsorbeur principal purgé pendant la première étape de détente.

Fig. 1

Fig. 2

*Fig. 3*

| | | E1 | ES | E2 E3 | ER | S1 | S2 | ⊠ B3 | B2 | B1 | B0 | | |

| E1 | E2 | ES | S | B2 B1 B0 | | | E2 | ES | S | B2 | | B0 | | F1 | E2 | ES | S | B2 B1 B0 |

| | ER | S1 | S2 | ⊠ | B2 | B1 | B0 | | | E1 | ES | E2 | ER | S1 | S2 | ⊠ | B2 |

| | E1 | ES | E2 | ER | S1 | S2 | ⊠ | B2 | B1 | B0 | | | E1 | ES | E2 | ER |

| | B0 | | E1 | E2 | ES | S | B2 B1 B0 | | | E2 | ES | S | B2 | | B0 | | E1 | E2 |

| B3 | B2 | B1 | B0 | | E1 | ES | E2 E3 | ER | S1 | S2 | ⊠ B3 | B2 | B1 | B0 | |

**Fig. 4**

Fig. 5

*Fig. 6*